(19) Europäisches Patentamt
European Patent Office
Office européen des brevets

(11) **EP 3 187 413 B1**

(12) **EUROPEAN PATENT SPECIFICATION**

(45) Date of publication and mention
of the grant of the patent:
**03.07.2019 Bulletin 2019/27**

(51) Int Cl.:
**B64C 3/58** *(2006.01)*       **B64C 9/32** *(2006.01)*

(21) Application number: **15203196.9**

(22) Date of filing: **30.12.2015**

(54) **AIRCRAFT WING WITH SPOILER**

FLUGZEUGFLÜGEL MIT SPOILER

AILE D'AERONEF AVEC PANNEAU DEPORTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2017 Bulletin 2017/27**

(73) Proprietors:
• **Airbus Defence and Space GmbH**
  **85521 Ottobrunn (DE)**
• **Airbus Operations GmbH**
  **21129 Hamburg (DE)**

(72) Inventors:
• **Hansen, Heinz**
  **28844 Weyhe (DE)**

• **Kirn, Johannes**
  **80686 München (DE)**
• **Machunze, Wolfgang**
  **82041 Oberhaching (DE)**
• **Metzner, Christian**
  **81539 München (DE)**
• **Weber, Markus J.**
  **21129 Hamburg (DE)**

(74) Representative: **LKGLOBAL**
**Lorenz & Kopf PartG mbB Patentanwälte**
**Brienner Straße 11**
**80333 München (DE)**

(56) References cited:
**EP-A2- 1 085 152       FR-A1- 3 014 410**
**US-A- 2 428 936        US-A- 6 145 791**
**US-A1- 2015 040 349**

**Description**

The invention relates to an aircraft wing with a spoiler, especially with a high lift spoiler. The spoiler is being movable from a reference position with a deflection angle $\alpha_{ref}$ to a given target deflection angle $\alpha_{target}$ by an actuator powered mechanism.

A spoiler, sometimes called a "lift spoiler" or "lift dumper", is a device intended to reduce lift in an aircraft. Spoilers are plates on the top surface of a wing that can be extended upward into the airflow to spoil it. By so doing, the spoiler creates a controlled stall over the portion of the wing behind it, greatly reducing the lift of that wing section. Spoilers differ from airbrakes in that airbrakes are designed to increase drag without affecting lift, while spoilers reduce lift as well as increasing drag. Spoilers fall into two categories: those that are deployed at controlled angles during flight to increase descent rate or control roll, and those that are fully deployed immediately on landing to greatly reduce lift ("lift dumpers") and increase drag. In modern fly-by-wire aircraft, the same set of control surfaces serve both functions. Spoilers can be used to slow an aircraft, or to make an aircraft descend, if they are deployed on both wings. Spoilers can also be used to generate a rolling motion for an aircraft, if they are deployed on only one wing.

The reduction of aerodynamic drag of aircraft wings is one of several research topics relevant for a better performance of the respective aircraft and a reduction of fuel burn. It is known that an optimal future laminar aircraft wing achieves for most or all operational aerodynamic situations a laminar boundary layer across the aircraft wing without any or only minimal turbulent air flow.

FR 3 014 410 A1 shows a flexible hinge comprising two elastic and flexible plates which are in one embodiment embedded in elastomer blocks.

US 2015/040349 shows another type of a hinged component, but it is not mentioned that the hinge component adopts the shape of a ring segment when it is bend.

It is the object of the invention to provide an aircraft wing with a spoiler, especially a high lift spoiler, with reduced aerodynamic drag.

A first aspect of the invention provides an aircraft wing with a spoiler and an actuator powered mechanism, the spoiler being movable from a reference position with a deflection angle $\alpha_{ref}$ to a given target deflection angle $\alpha_{target}$ by the actuator powered mechanism. The spoiler is interconnected with the aircraft wing exclusively via a strip element and via the actuator powered mechanism, wherein an upstream edge of the spoiler is being interconnected with the aircraft wing exclusively via the strip element made of a resiliently flexible material, wherein a downstream edge of the strip element is extending along the whole upstream edge of the spoiler or at least along a major part of the upstream edge of the spoiler, and wherein a whole upstream edge of the strip element is connected to an upper surface of the aircraft wing.

The proposed aircraft wing is characterized in that the powered mechanism is constructed and arranged such, that when moving the spoiler from the reference angle $\alpha_{ref}$ to the given target deflection angle $\alpha_{target}$, the strip element is being bent with a constant strain along the strip element, wherein a cross-section of the strip element for all deflection angles $\alpha$ adopts the form of a ring segment with a radius $R(\alpha)$.

Preferably the actuator powered mechanism is integrated into the aircraft wing. The actuator powered mechanism may consist only of an actuator or comprise an actuator and a mechanism which is driven by the actuator.

In a preferred embodiment of the aircraft wing a passage from the upper surface of the aircraft wing via the upper surface of the strip element to the upper surface of the spoiler is a smooth and gapless surface.

In the proposed aircraft wing the strip element is exposed to a minimum bending strain resulting in a high fatigue endurance limit of the strip element.

In a preferred embodiment the minimum thickness of the strip element made of a given material / structure is defined by a given failure tolerance. For achieving a minimum bending strain the thickness of the strip element should be as small as possible. In a preferred embodiment the strip element is made of a metal, a metal alloy, a carbon fiber composite, a glass fiber composite or a mixture thereof.

Because of the proposed strip element and its respective bending an air flow over the spoiler is kept laminar to the maximum extent, thus reducing the overall aerodynamic drag of the aircraft wing especially when the spoiler is deployed. The strip element is replacing hinge connections used today for attaching spoilers to aircraft wings. These hinge connections typically lead to gaps between the upper surface of the aircraft wing and the spoiler surface producing turbulent airflows. The proposed strip element and its respective bending prevents or at least significantly reduces the production of turbulent air flow.

A preferred embodiment of the aircraft wing is characterized in that the target deflection angle $\alpha_{target}$ is being selected from the interval: $\alpha \in$ [-30°; 60°] or [-20°; 60°] or [-15°; 60°] or [-10°; 50°]. The negative deflection angles $\alpha$ indicate a droop functionality of the spoiler wherein for example a landing flap connected with the aircraft wing is lowered and the spoiler is following the landing flap lowering within certain limits. In a preferred embodiment the spoiler is also able to follow a lift of such a landing flap producing variable cross-sections of the aircraft wing, a so-called "variable camber functionality".

A preferred embodiment of the aircraft wing is characterized in that the given margin of failure indicating a deviation of the form of the actual cross-section of the strip element from the respective ring segment with a radius $R(\alpha)$ is less than 15 % or 10 % or 5 % or 2 % or 1 %. The deviation is calculated based on methods known by a person having ordinary experience and the respective art. It is clear that the bending strain in the strip element is optimally reduced to a minimum when the deviation from the form of the actual cross-section of the strip element to the respective ring segment is a minimum (theoretically equalling zero).

A preferred embodiment of the aircraft wing is characterized in that the actuator powered mechanism comprises a guidance kinematic or a guidance rail, a guidance lever and an actuator, wherein the guidance kinematic is fixed to a contact C1 on an inner structure of the aircraft wing (e.g. the wing box), a first end of the guidance lever is rigidly connected to a contact C2 on a lower side of the spoiler, two connecting elements separated by a distance D are connected to a second end of the guidance lever, the connecting elements being movably coupled to the guidance kinematic, wherein the connecting elements are exclusively allowing a movement of the first end guidance lever along the guidance kinematic. The guidance kinematic has a longitudinal extension and a respective 3D-form.

In a preferred embodiment the guidance kinematic impresses a respective position and orientation onto the spoiler depending on the actual deflection angle $\alpha$. The impressed position and orientation of the spoiler result in that the cross-section of the strip element optimally assumes the said form of a ring segment.

In a preferred embodiment the actuator powered mechanism is constructed such that it absorbs the majority of forces and moments from the spoiler and transfers these forces and moments to an inner structure of the aircraft wing.

A preferred embodiment is characterized in that the actuator of the actuator powered mechanism is fixed to an inner structure of the aircraft wing and connected to the guidance lever for moving the guidance lever along the guidance kinematic, with the movement being dependant on a given target deflection angle $\alpha_{target}$, wherein any deflection angle $\alpha \in [-\alpha_1; \alpha_2]$ corresponds to a distinct position of the guidance lever along the guidance bearing, and wherein the guidance kinematic has a 3D-form such that the spoiler for all deflection angles $\alpha$ is articulated by the guidance lever such that the cross-section of the flexible strip element for all deflection angles $\alpha$ assumes said form of a ring segment with a radius $R(\alpha)$.

In a preferred embodiment the connecting elements comprise rollers. The rollers enable a more or less frictionless movement of the guidance lever along the guidance kinematic.

The guidance kinematic may be selected from various variants, for example: horizontally and/or vertically moving, extending, or even introducing a reverse force by attaching a spring.

A preferred embodiment of the aircraft wing is characterized in that the actuator powered mechanism is constructed and arranged such that the majority of an air load on the spoiler is transferred via the actuator powered mechanism to the airfoil, wherein only a minimum of the air load is transferred to an actuator of the actuator powered mechanism or via the actuator to the inner structure of the aircraft wing respectively.

In a preferred embodiment the actuator powered mechanism nearly completely (90 % - 100 %) absorbs the air loads (forces and moments), especially in a fully deployed status of the spoiler ($\alpha = \alpha_{max} = \alpha_2$), and transfers these loads to the inner structure of the aircraft wing, whereas the actuator of the actuator powered mechanism holds the spoiler nearly forceless. This leads to significant reductions of the requirements for the actuator and thus to significant cost and weight reductions.

A preferred embodiment of the aircraft wing is characterized in that the actuator powered mechanism is constructed such that 85 % or 90 % or 95 % or 97 % or 98 % or 99 % of the air load on the spoiler is transferred via the actuator powered mechanism to the aircraft wing and that less than 15 %, or 10 % or 5 % or 3 % or 2 % or 1 % are transferred to the actuator.

In a preferred embodiment the guidance lever is variable in its length L depending on deflection angle $\alpha$: $L = L(\alpha)$ and/or on its geometry $G(\alpha)$.

In a preferred embodiment the actuator powered mechanism is constructed such that a virtual center position $CP(\alpha)$ of the ring segment with the radius $R(\alpha)$ varies with $\alpha$ in three-dimensional space allowing impressing the respective position and orientation onto the spoiler.

A preferred embodiment of the proposed aircraft wing is characterized in that the spoiler comprises at least the following segments: an upstream segment $SEG_1$ with a stiffness $S_1$, a downstream segment $SEG_2$ with a stiffness $S_2$, a connecting segment $SEG_3$ with a stiffness $S_3$, the connecting segment $SEG_3$ is connecting a downstream edge of $SEG_1$ with an upstream edge of $SEG_2$, the strip element connecting an upstream edge of $SEG_1$ to the upper surface of the aircraft wing, wherein at least the connecting segment $SEG_3$ possesses a mechanical pretension resulting in a convex shape of the upper surface of the spoiler, with $S_3 < S_1, S_2$.

In this embodiment the spoiler may act as an adaptive shock control bump allowing an improvement of the performance of the aircraft wing and especially contributes to an improvement of the buffeting behaviour and a reduction of the characteristic impedance of the air aircraft wing. The shape of the shock control bump may be modified by the actuator powered mechanism when the spoiler is in the reference position.

In a preferred embodiment the actuator powered mechanism is constructed such that it allows even in case of a failure of the strip element a retraction and an extension of the spoiler. This is possible because the orientation and position of the spoiler is mechanically defined by the actuator powered mechanism. The actuator powered mechanism transfers nearly all forces and moments from the spoiler to the aircraft wing, whereas the strip element preferably does only transfer an irrelevant minimum of forces or moments from the spoiler to the aircraft wing. The main effect of the strip element is to keep a laminar flow in a boundary layer as long as possible leading to a reduction of aerodynamic drag of the aircraft wing. In case of failure of the strip element turbulent flow may occur but the spoiler itself would not be jeopardized in its functionality.

The proposed aircraft wing shows a gapless connection of the spoiler to the upper surface of the aircraft wing by the strip element leading to a reduction of aerodynamic drag. This aspect may be used on today's transonic and laminar aircraft wings. The proposed actuator powered mechanism absorbs nearly all forces and moments on the spoiler and transfers these forces and moments to an inner structure of the aircraft wing (e.g. the wing box), preferably without transferring these forces and moments via the actuator of the actuator powered mechanism to the aircraft wing. The forces and moments transferred by the strip element to the aircraft wing are insignificant and are mainly due to the impressed bending forces. The proposed aircraft wing is proving air flow across the wing both in extended and retracted positions of the spoiler.

A second aspect of the invention provides an aircraft or spaceship with an aircraft wing as described before.

**Brief description of drawings**

Fig. 1    schematic cross-sectional view of the flexible strip element and geometric properties,
Fig. 2    schematic cross-sectional view of the aircraft wing with the spoiler in deployed position, and
Fig. 3    schematic cross-sectional view of a proposed aircraft wing including a spoiler.

The following description provides an approach for the estimation of occurring mechanical strain within the flexible strip element for deployed spoiler positions, i.e. $\alpha \neq \alpha_{ref}$. Furthermore, the traces of the moving end point and a guidance point are determined based on a deflection angle $\alpha$ of the spoiler.

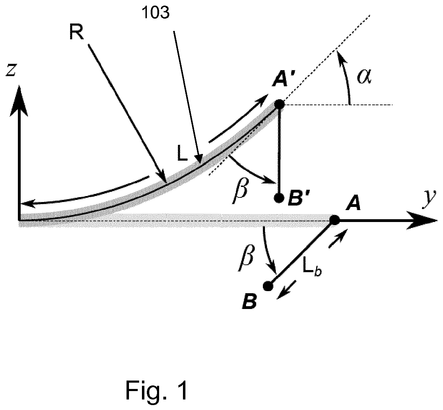

The principle geometry of the flexible strip element is shown in **Fig. 1**. The main flow direction is orientated along the y-axis. The elevation above the aircraft wing surface is orientated along the z-axis. At y = 0 the upstream edge of the strip element is connected to the upper surface of the aircraft wing. The strip element is assumed to bend in a circular shape of radius R. The length L of the strip element stays constant, implying zero extensional strain. The strip element is deformed such that at its end point A the strip element is inclined by an angle $\alpha$ which is the deflection angle $\alpha$ of the spoiler. Consequently, the criterion of maximum strain reduces to a pure geometric problem with no mechanical properties being involved. The bending moment is assumed constant along the strip element. However, large displacements must obviously be taken into account.

Trace of a guidance point A

A point P on the deformed strip element is bound to the circular shape, its location follows

$$(1) \qquad y^2 + (R - z)^2 = R^2$$

or making use of the involved quantities being always positive,

$$(2) \qquad y = \sqrt{z^2 - 2Rz} \qquad \text{or} \qquad z = R - \sqrt{R^2 - y^2}$$

The length L of the strip element is constant, and may be expressed with the angle $\alpha$ from the circle's circumference,

$$(3) \qquad L = \alpha R.$$

The angle $\alpha$ may be expressed using the tangens of a triangle from the circle centre to the point P to the point projected onto the z-axis,

$$(4) \qquad \tan \alpha = \frac{y}{R - z}$$

or alternatively from the slope of the circular curve, using the right of (2),

$$(5) \qquad \tan \alpha = \frac{dz}{dy} = \frac{y}{\sqrt{R^2 - y^2}}$$

Solving the latter for $y^2$ yields

$$(6) \qquad y^2 = \frac{R^2 \tan^2 \alpha}{1 + \tan^2 \alpha} = R^2 \sin^2 \alpha$$

which after substituting (3) for R reveals a trace of point A in terms of $\alpha$ as

$$(7) \qquad y_a = (L / \alpha) \sin \alpha \, , \; z_a = (\alpha L / 2)(1 - \alpha^2 / 12)$$

This solution unfortunately bears an impractical singularity for the undeformed strip element at zero $\alpha$. For that matter, a series expansion about $\alpha$ approaching zero and up to the second order terms yields

$$(8) \qquad y = L(1 - \alpha^2 / 6) \, , \; z_b = z_a - L_b \sin(\alpha + \beta)$$

providing the expected position of the undeformed strip element. Hence, (7) is the sought trace of the end point A with respect to an externally applied rotation $\alpha$.

Trace of a guidance point B

Suppose a point B with a constant distance $L_B$ from point A at an initial inclination angle $\beta$, following the rotation of point A. Then its trace is subject to

$$(9) \qquad y_b = y_a - L_b \cos(\alpha + \beta) \, , \; z_b = z_a - L_b \sin(\alpha + \beta)$$

This formulation permits two of the parameters of length $L_b$, angle $\beta$, and coordinates $y_b$, $z_b$ to be pre-defined. Accordingly, the remaining two parameters would be the result of the movement of the flexible strip element. This allows various variants of a guidance kinematic, for instance horizontally or vertically moving, extending, or possibly even introducing a reverse force by attaching a spring.

Bending surface strains

The (linear) strains of a particle with the distance z to the mid-plane of a shell is determined by

$$(10) \qquad \varepsilon = \varepsilon_0 \pm z \kappa_0$$

where $\varepsilon_0$ is the extensional strain and $\kappa_0$ the curvature at a mid-plane. The curvature of a circle is revealed by

$$(11) \qquad \kappa_0 = 1/R$$

Due to the assumption of inextensible deformation, $\varepsilon_0 = 0$, the strains at the surface of the shell of thickness t read

$$(12) \quad \varepsilon_{\min/\max} = \frac{t}{2R} = \frac{\alpha t}{2L}$$

from which one may infer the minimum length given maximum strain allowable and a desired angle of inclination as

$$(13) \quad L \geq \frac{\alpha t}{2\varepsilon_{allowed}}$$

and in which $\varepsilon_{allowed}$ reflects the minimum absolute value of tensional and compressive strain allowable.

Radius of curvature of guidance curve

The center of the guidance curve CP($\alpha$) in dependence of the deflection angle $\alpha$ may be inferred with

$$(14) \quad y_b^{'} = \frac{\partial y_b}{\partial \alpha}, \ y_b^{''} = \frac{\partial^2 y_b}{\partial \alpha^2}, \ z_b^{'} = \frac{\partial z_b}{\partial \alpha}, \ z_b^{''} = \frac{\partial^2 z_b}{\partial \alpha^2}$$

from

$$(15) \quad R_b = \frac{\left( \left( \frac{dy_b}{d\alpha} \right)^2 + \left( \frac{dz_b}{d\alpha} \right)^2 \right)^{3/2}}{\left| \frac{dy_b}{d\alpha} \frac{d^2 z_b}{d\alpha^2} - \frac{dz_b}{d\alpha} \frac{d^2 y_b}{d\alpha^2} \right|} = \frac{(y_b^{'2} + z_b^{'2})^{3/2}}{\left| y_b^{'} z_b^{''} - z_b^{'} y_b^{''} \right|} \quad R_b = R_b(\alpha)$$

The location of the curvature center CP($\alpha$) is then found with

$$(16) \quad y_c = y_b - R_b \cos \arctan \left( \frac{y_b^{'}}{z_b^{'}} \right), \quad (y_c = y_c(\alpha))$$

$$(17) \quad z_c = z_b - R_b \sin \arctan \left( \frac{y_b^{'}}{z_b^{'}} \right), \quad (z_c = z_c(\alpha))$$

Kinematic loads

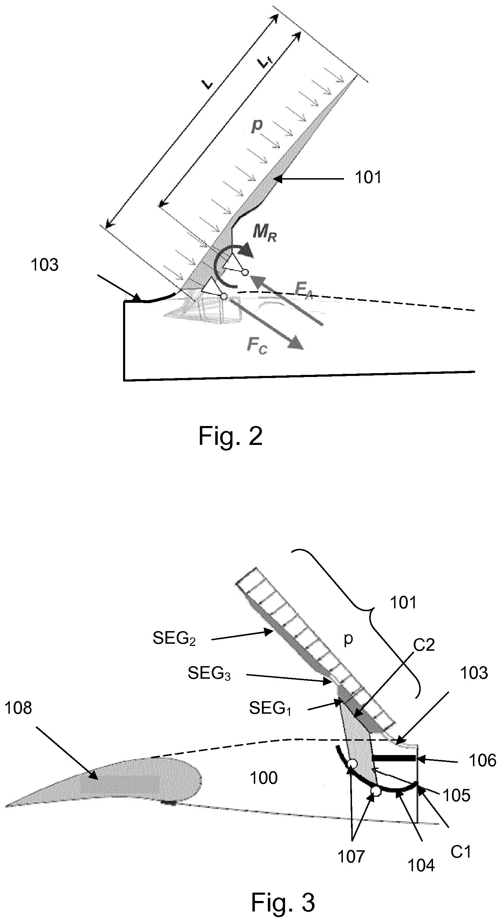

The spoiler (see **Fig. 2**) is subject to a constant pressure p acting in normal direction to the spoiler surface of total length L. The actuator kinematic is located at distance $L_f$ from the downstream edge of the spoiler. The total force per lateral unit length the actuator kinematic is required to provide is

$$F_A = F_C + pL$$

in which $F_C$ is the load required by the counter kinematic to eliminate the resulting bending moment:

$$M_R = \frac{p}{2}(L - L_f)^2 - \frac{p}{2}L_f^2 + F_C L_C = pL \left( \frac{L}{2} - L_f \right) + F_C L_C$$

Supposing the counter kinematic is located at the inside spoiler edge, $L_C = L - L_f$, then a zero bending moment,

$M_R = 0$, is achieved when

$$F_A = \frac{pL}{2}\left(\frac{L_f}{L - L_f} - 1\right).$$

$F_C$ obviously becomes zero, if the actuator kinematic is located in the center of the spoiler cord, $L_f = L/2$. With $F_C$ the actuator force is obtained as

$$F_A = \frac{pL}{2}\left(\frac{L_f}{L - L_f} + 1\right)$$

which simply is the pressure resultant increased by the counter force.

**Fig. 3** illustrates a schematic cross-sectional view of a proposed aircraft wing 100 with a spoiler 101 and a trailing edge flap 108. The spoiler 101 is being movable from a reference position with a deflection angle $\alpha_{ref}$ to a given target deflection angle $\alpha_{target}$ by an actuator powered mechanism.

The spoiler 101 is interconnected with the aircraft wing exclusively via a strip element 103 and via the actuator powered mechanism, wherein an upstream edge of the spoiler 101 is being interconnected with the aircraft wing 100 exclusively via the strip element 103 made of a resiliently flexible material, wherein a downstream edge of the strip element 103 is extending along the whole upstream edge of the spoiler 101 and wherein a whole upstream edge of the strip element 103 is connected to an upper surface of the aircraft wing. The passage from the upper surface of the aircraft wing 100 via the upper surface of the strip element 103 to the upper surface of the spoiler 101 is a smooth and gapless surface.

The actuator powered mechanism is constructed and arranged such that while moving the spoiler 101 from the reference angle $\alpha_{ref}$ to the given target deflection angle $\alpha_{target}$, the strip element 103 is being bent with a constant strain along the strip element 103, wherein a cross-section of the strip element 103 for all deflection angles $\alpha$ assumes the form of a ring segment with a radius $R(\alpha)$ at least within a given margin of failure, with $\alpha$, $\alpha_{target}$, $\alpha_{ref} \in [-\alpha_1; \alpha_2]$.

In the illustrated example the actuator powered mechanism comprises a guidance kinematic 104, a guidance lever 105 and an actuator 106, wherein the guidance kinematic 104 is fixed to a contact C1 on an inner structure of the aircraft wing (wing box), a first end of the guidance lever 105 is rigidly connected to a contact C2 on a lower side of the spoiler 101. Two connecting elements 107 separated by a distance D are connected to a second end of the guidance lever 105. The connecting elements 107 being movably coupled to the guidance kinematic 104, wherein the connecting elements 107 are exclusively allowing a movement of the first end guidance lever 105 along the guidance kinematic 104.

The actuator 106 is fixed to an inner structure (wing box) of the aircraft wing 100 and further is connected to the guidance lever 105 for moving the guidance lever 105 along the guidance kinematic 104. The movement of the guidance lever 105 being dependant on a given target deflection angle $\alpha_{target}$, wherein any deflection angle $\alpha \in [-\alpha_1; \alpha_2]$ corresponds to a distinct position of the guidance lever 105 along the guidance kinematic 104, and wherein the guidance kinematic 104 has a 3D-form such that the spoiler 101 for all deflection angles $\alpha$ is articulated by the guidance lever 105 such that the cross-section of the flexible strip element 103 for all deflection angles $\alpha$ assumes the form of a ring segment with a radius $R(\alpha)$.

The spoiler 101 comprises the following segments: an upstream segment $SEG_1$ with a stiffness $S_1$, a downstream segment $SEG_2$ with a stiffness $S_2$, and a connecting segment $SEG_3$ with a stiffness $S_3$. The connecting segment $SEG_3$ is connecting a downstream edge of $SEG_1$ with an upstream edge of $SEG_2$ and the strip element 103 is connecting an upstream edge of $SEG_1$ to the upper surface of the aircraft wing 100. The connecting segment $SEG_3$ possesses a mechanical pretension, which results in a given convex shape of the upper surface of the spoiler 101, with $S_3 < S_1, S_2$.

The terms "upstream" and "downstream" are referring to a main flow direction across the aircraft wing when airborne. The term "cross-section" for example refers to a cross-section along the main flow direction across the wing or along the longitudinal axis of the aircraft.

The term "stiffness" refers to a structural (mechanical) stiffness of the respective segment or strip element 103. In a preferred embodiment the segments $SEG_1$, $SEG_2$ are made of a metal, a metal alloy, a carbon fiber composite, a glass fiber composite or a mixture thereof. In a preferred embodiment the interconnecting segment $SEG_3$ and/or the strip element 103 are made of a metal, a metal alloy, a carbon fiber composite, a glass fiber composite or a mixture thereof. In a preferred embodiment the stiffness of segments $SEG_1$ and/or $SEG_2$ are selected such that said segments are dimensionally stable at least under operational air loads on the upper surface element. In a preferred embodiment the stiffness of segment $SEG_3$ is selected such that, firstly based on the mechanical pretension a convex shape of the upper surface element is conserved if no forces, especially no forces induced by the actuator 105 are acting on the spoiler, and secondly that the interconnecting segment $SEG_3$ is resiliently flexible enough for allowing a variation of the shape of the upper surface of the spoiler induced by the actuator 106. In a preferred embodiment the stiffness $S_1$ equals the stiffness $S_2$: $S_1 = S_2$.

**List of reference signs**

| 100 | aircraft wing |
| 101 | spoiler |
| 103 | flexible strip element |
| 104 | guidance kinematic |
| 105 | guidance lever |
| 106 | actuator of the actuator powered mechanism |
| 107 | connecting elements |
| 108 | trailing edge flap |

**Claims**

1. Aircraft wing (100) with a spoiler (101) and an actuator powered mechanism, the spoiler (101) being movable from a reference position with a deflection angle $\alpha_{ref}$ to a given target deflection angle $\alpha_{target}$ by the actuator powered mechanism, wherein the spoiler (101) is interconnected with the aircraft wing exclusively via a strip element (103) and via the actuator powered mechanism, wherein an upstream edge of the spoiler (101) is being interconnected with the aircraft wing (100) exclusively via the strip element (103) made of a resilient flexible material, wherein a downstream edge of the strip element (103) is extending along the whole upstream edge of the spoiler (101) or at least along a major part of the upstream edge of the spoiler (101) and wherein a whole upstream edge of the strip element is connected to an upper surface of the aircraft wing, **characterized in that**

   - the actuator powered mechanism is constructed and arranged such that when moving the spoiler (101) from the reference angle $\alpha_{ref}$ to the given target deflection angle $\alpha_{target}$, the strip element (103) is being bent with a constant strain along the strip element (103), wherein a cross-section of the strip element (103) for all deflection angles $\alpha$ adopts the form of a ring segment with a radius $R(\alpha)$.

2. Aircraft wing (100) of claim 1, **characterized in that** a passage from the upper surface of the aircraft wing (100) via the upper surface of the strip element (103) to the upper surface of the spoiler (101) is a smooth surface.

3. Aircraft wing (100) of any of the preceding claims, **characterized in that** the target deflection angle $\alpha_{target}$ is being selected from the interval: $\alpha \in$ [-30°; 60°] or [-20°; 60°] or [-15°; 60°] or [-10°; 50°].

4. Aircraft wing (100) of any of the preceding claims, **characterized in that** the actuator powered mechanism comprises a guidance kinematic (104), a guidance lever (105) and an actuator (106), wherein:

   - the guidance kinematic (104) is fixed to a contact C1 on an inner structure of the airfoil,
   - a first end of the guidance lever (105) is rigidly connected to a contact C2 on a lower side of the spoiler (101),
   - two connecting elements (107) separated by a distance D are connected to a second end of the guidance lever (105),
   - the connecting elements (107) being movably coupled to the guidance kinematic (104), wherein the connecting elements (107) are exclusively allowing a movement of the first end guidance lever (105) along the guidance kinematic (104),
   - the actuator (106) is fixed to an inner structure of the aircraft wing (100) and further is connected to the guidance lever (105) for moving the guidance lever (105) along the guidance kinematic (104), the movement being dependant on a given target deflection angle $\alpha_{target}$, and
   wherein any deflection angle $\alpha \in$ [$-\alpha_1$; $\alpha_2$] corresponds to a distinct position of the guidance lever (105) along the guidance kinematic (104), and wherein the guidance kinematic (104) has a 3D-form such that the spoiler (101) for all deflection angles $\alpha$ is articulated by the guidance lever (105) such that the cross-section of the flexible strip element (103) for all deflection angles $\alpha$ assumes the form of said ring segment with a radius $R(\alpha)$.

5.  Aircraft wing (100) of claim 4,
    **characterized in that** the connecting elements (107) comprise rollers.

6.  Aircraft wing (100) of any of the preceding claims 4 or 5,
    **characterized in that** the guidance lever (105) is variable in its length L depending on deflection angle $\alpha$: L = L($\alpha$).

7.  Aircraft wing (100) of any of the preceding claims,
    **characterized in that** the actuator powered mechanism is arranged in the aircraft wing (100).

8.  Aircraft wing (100) of any of the preceding claims,
    **characterized in that** a virtual center position CP($\alpha$) of the ring segment with the radius R($\alpha$) varies with $\alpha$.

9.  Aircraft wing (100) of any of the preceding claims,
    **characterized in that** the spoiler (101) comprises at least the following segments:

    - an upstream segment $SEG_1$ with a stiffness $S_1$,
    - a downstream segment $SEG_2$ with a stiffness $S_2$,
    - a connecting segment $SEG_3$ with a stiffness $S_3$, the connecting segment $SEG_3$ is connecting a downstream edge of $SEG_1$ with an upstream edge of $SEG_2$,
    - the strip element (103) connecting an upstream edge of $SEG_1$ to the upper surface of the aircraft wing (100), wherein at least the connecting segment $SEG_3$ possesses a mechanical pretension, which would, if no forces are acting on the spoiler (101), result in a given convex shape of the upper surface of the spoiler (101), with $S_3 < S_1, S_2$.

10. Aircraft or spaceship with an aircraft wing of any one of the preceding claims 1-9.

**Patentansprüche**

1.  Flugzeugtragfläche (100) mit einer Störklappe (101) und einem stellgliedbetriebenen Mechanismus, wobei die Störklappe (101) durch den stellgliedbetriebenen Mechanismus von einer Referenzstellung mit einem Ausschlagwinkel $\alpha_{Ref}$ zu einem gegebenen Sollausschlagwinkel $\alpha_{Soll}$ bewegbar ist, wobei die Störklappe (101) ausschließlich über ein Bandelement (103) und über den stellgliedbetriebenen Mechanismus mit der Flugzeugtragfläche verbunden ist, wobei eine stromaufwärts gelegene Kante der Störklappe (101) ausschließlich über das aus einem nachgiebigen flexiblen Material hergestellte Bandelement (103) mit der Flugzeugtragfläche (100) verbunden ist, wobei sich eine stromabwärts gelegene Kante des Bandelements (103) entlang der gesamten stromaufwärts gelegenen Kante der Störklappe (101) oder wenigstens entlang einem Großteil der stromaufwärts gelegenen Kante der Störklappe (101) erstreckt und wobei eine gesamte stromaufwärts gelegene Kante des Bandelements mit einer oberen Fläche der Flugzeugtragfläche verbunden ist, **dadurch gekennzeichnet, dass**

    - der stellgliedbetriebene Mechanismus auf eine solche Weise ausgelegt und angeordnet ist, dass, wenn sich die Störklappe (101) von dem Referenzwinkel $\alpha_{Ref}$ zu dem gegebenen Sollausschlagwinkel $\alpha_{Soll}$ bewegt, das Bandelement (103) mit einer konstanten Beanspruchung entlang dem Bandelement (103) gebogen wird, wobei ein Querschnitt des Bandelements (103) für alle Ausschlagwinkel $\alpha$ die Form eines Ringsegments mit einem Radius R($\alpha$) annimmt.

2.  Flugzeugtragfläche (100) nach Anspruch 1,
    **dadurch gekennzeichnet, dass** ein Übergang von der oberen Fläche der Flugzeugtragfläche (100) über die obere Fläche des Bandelements (103) zu der oberen Fläche der Störklappe (101) eine glatte Fläche ist.

3.  Flugzeugtragfläche (100) nach einem der vorhergehenden Ansprüche,
    **dadurch gekennzeichnet, dass** der Sollausschlagwinkel $\alpha_{Soll}$ aus folgendem Bereich ausgewählt ist:
    $\alpha \in$ [-30°; 60°] oder [-20°; 60°] oder [-15°; 60°] oder [-10°; 50°].

4.  Flugzeugtragfläche (100) nach einem der vorhergehenden Ansprüche,
    **dadurch gekennzeichnet, dass** der stellgliedbetriebene Mechanismus eine Führungskinematik (104), einen Führungshebel (105) und ein Stellglied (106) umfasst, wobei:

- die Führungskinematik (104) auf einer Innenstruktur des Flügels an einem Kontakt C1 befestigt ist,
- ein erstes Ende des Führungshebels (105) auf einer unteren Seite der Störklappe (101) starr mit einem Kontakt C2 verbunden ist,
- zwei Verbindungselemente (107), die durch einen Abstand D getrennt sind, mit einem zweiten Ende des Führungshebels (105) verbunden sind,
- die Verbindungselemente (107) auf bewegliche Weise mit der Führungskinematik (104) gekoppelt sind, wobei die Verbindungselemente (107) ausschließlich eine Bewegung des am ersten Ende befindlichen Führungshebels (105) entlang der Führungskinematik (104) ermöglichen,
- das Stellglied (106) an einer Innenstruktur der Flugzeugtragfläche (100) befestigt und ferner mit dem Führungshebel (105) verbunden ist, um den Führungshebel (105) entlang der Führungskinematik (104) zu bewegen, wobei die Bewegung von einem gegebenen Sollausschlagwinkel $\alpha_{Soll}$ abhängig ist, und

wobei jeder beliebige Ausschlagwinkel $\alpha \in [-\alpha_1; \alpha_2]$ einer eindeutigen Stellung des Führungshebels (105) entlang der Führungskinematik (104) entspricht und wobei die Führungskinematik (104) derart eine 3D-Form aufweist, dass die Störklappe (101) für alle Ausschlagwinkel $\alpha$ auf eine solche Weise durch den Führungshebel (105) gelenkig gelagert ist, dass der Querschnitt des flexiblen Bandelements (103) für alle Ausschlagwinkel $\alpha$ die Form des Ringsegments mit einem Radius $R(\alpha)$ annimmt.

5. Flugzeugtragfläche (100) nach Anspruch 4,
**dadurch gekennzeichnet, dass** die Verbindungselemente (107) Rollen umfassen.

6. Flugzeugtragfläche (100) nach einem der vorhergehenden Ansprüche 4 oder 5,
**dadurch gekennzeichnet, dass** der Führungshebel (105) abhängig von dem Ausschlagwinkel $\alpha$: $L = L(\alpha)$ in seiner Länge L veränderbar ist.

7. Flugzeugtragfläche (100) nach einem der vorhergehenden Ansprüche,
**dadurch gekennzeichnet, dass** der stellgliedbetriebene Mechanismus in der Flugzeugtragfläche (100) angeordnet ist.

8. Flugzeugtragfläche (100) nach einem der vorhergehenden Ansprüche,
**dadurch gekennzeichnet, dass** sich eine gedachte mittlere Stellung $CP(\alpha)$ des Ringsegments mit dem Radius $R(\alpha)$ mit $\alpha$ ändert.

9. Flugzeugtragfläche (100) nach einem der vorhergehenden Ansprüche,
**dadurch gekennzeichnet, dass** die Störklappe (101) wenigstens die folgenden Segmente umfasst:

- ein stromaufwärts gelegenes Segment $SEG_1$ mit einer Steifigkeit $S_1$,
- ein stromabwärts gelegenes Segment $SEG_2$ mit einer Steifigkeit $S_2$,
- ein Verbindungssegment $SEG_3$ mit einer Steifigkeit $S_3$, wobei das Verbindungssegment $SEG_3$ eine stromabwärts gelegene Kante von $SEG_1$ mit einer stromaufwärts gelegenen Kante von $SEG_2$ verbindet,
- wobei das Bandelement (103) eine stromaufwärts gelegene Kante von $SEG_1$ mit der oberen Fläche der Flugzeugtragfläche (100) verbindet,
wobei wenigstens das Verbindungssegment $SEG_3$ eine mechanische Vorspannung besitzt, die, würden keine Kräfte auf die Störklappe (101) wirken, zu einer gegebenen konvexen Form der oberen Fläche der Störklappe (101) mit $S_3 < S_1, S_2$ führen würden.

10. Flugzeug oder Raumschiff mit einer Flugzeugtragfläche nach einem der vorhergehenden Ansprüche 1 bis 9.

## Revendications

1. Aile (100) d'aéronef munie d'un spoiler (101) et d'un mécanisme mû par actionneur, le spoiler (101) étant mobile depuis une position de référence avec un angle de braquage $\alpha_{ref}$ jusqu'à un angle de braquage cible donné $\alpha_{target}$ au moyen du mécanisme mû par actionneur,
le spoiler (101) étant interconnecté avec l'aile d'aéronef exclusivement par le biais d'un élément formant bande (103) et par le biais du mécanisme mû par actionneur, un bord amont du spoiler (101) étant interconnecté à l'aile (100) d'aéronef exclusivement par le biais de l'élément formant bande (103) constitué d'un matériau souple élastique, un bord aval de l'élément formant bande (103) s'étendant le long de la totalité du bord amont du spoiler (101) ou au moins le long d'une grande partie du bord amont du spoiler (101), et la totalité d'un bord amont de l'élément formant bande étant connectée à une surface supérieure de l'aile d'aéronef,
**caractérisée en ce que**

- le mécanisme mû par actionneur est construit et agencé de manière à ce que, lors du mouvement du spoiler (101) depuis l'angle de référence $\alpha_{ref}$ jusqu'à l'angle de braquage cible donné $\alpha_{target}$, l'élément formant bande (103) se recourbe avec une déformation constante le long de l'élément formant bande (103), une section transversale de l'élément formant bande (103) pour tous les angles de braquage $\alpha$ adoptant la forme d'un segment d'anneau de rayon $R(\alpha)$.

2. Aile (100) d'aéronef selon la revendication 1,
**caractérisée en ce qu'**un passage allant de la surface supérieure de l'aile (100) d'aéronef à la surface supérieure du spoiler (101) par le biais de la surface supérieure de l'élément formant bande (103) constitue une surface lisse.

3. Aile (100) d'aéronef selon l'une quelconque des revendications précédentes,
**caractérisée en ce que** l'angle de braquage cible $\alpha_{target}$ est choisi dans l'intervalle : $\alpha_{ref}$ E [-30° ; 60°] ou [-20° ; 60°] ou [-15° ; 60°] ou [-10° ; 50°].

4. Aile (100) d'aéronef selon l'une quelconque des revendications précédentes,
**caractérisée en ce que** le mécanisme mû par actionneur comprend une cinématique de guidage (104), un levier de guidage (105) et un actionneur (106),

- la cinématique de guidage (104) étant fixée à un contact C1 sur une structure intérieure du profil aérodynamique,
- une première extrémité du levier de guidage (105) est solidarisée à un contact C2 sur un côté inférieur du spoiler (101),
- deux éléments de connexion (107) séparés par une distance D sont connectés à une deuxième extrémité du levier de guidage (105),
- les éléments de connexion (107) étant couplés mobiles à la cinématique de guidage (104), les éléments de connexion (107) permettant exclusivement un mouvement du levier de guidage (105) de la première extrémité le long de la cinématique de guidage (104),
- l'actionneur (106) est fixé à une structure intérieure de l'aile (100) d'aéronef et en outre est connecté au levier de guidage (105) pour mouvoir le levier de guidage (105) le long de la cinématique de guidage (104), le mouvement étant fonction d'un angle de braquage cible donné $\alpha_{target}$, et
un angle de braquage quelconque $\alpha \in [-\alpha_1 ; \alpha_2]$ correspondant à une position distincte du levier de guidage (105) le long de la cinématique de guidage (104), et la cinématique de guidage (104) présentant une forme 3D telle que le spoiler (101), pour tous les angles de braquage $\alpha$, soit articulé par le levier de guidage (105) de sorte que la section transversale de l'élément formant bande souple (103), pour tous les angles de braquage $\alpha$, adopte la forme dudit segment d'anneau de rayon $R(\alpha)$.

5. Aile (100) d'aéronef selon la revendication 4,
**caractérisée en ce que** les éléments de connexion (107) comprennent des galets.

6. Aile (100) d'aéronef selon l'une quelconque des revendications 4 ou 5,
**caractérisée en ce que** le levier de guidage (105) est variable en longueur L en fonction de l'angle de braquage $\alpha : L = L(\alpha)$.

7. Aile (100) d'aéronef selon l'une quelconque des revendications précédentes,
**caractérisée en ce que** le mécanisme mû par actionneur est agencé dans l'aile (100) d'aéronef.

8. Aile (100) d'aéronef selon l'une quelconque des revendications précédentes,
**caractérisée en ce qu'**une position de centre $CP(\alpha)$ virtuelle du segment d'anneau de rayon $R(\alpha)$ varie avec $\alpha$.

9. Aile (100) d'aéronef selon l'une quelconque des revendications précédentes,
**caractérisée en ce que** le spoiler (101) comprend au moins les segments suivants :

- un segment amont $SEG_1$ de raideur $S_1$,
- un segment aval $SEG_2$ de raideur $S_2$,
- un segment de connexion $SEG_3$ de raideur $S_3$, le segment de connexion $SEG_3$ connectant un bord aval de $SEG_1$ à un bord amont de $SEG_2$,

- l'élément formant bande (103) connectant un bord amont de SEG$_1$ à la surface supérieure de l'aile (100) d'aéronef,

au moins le segment de connexion SEG$_3$ présentant une prétension mécanique qui, si aucune force n'agissait sur le spoiler (101), conférerait une forme convexe donnée à la surface supérieure du spoiler (101), avec S$_3$ < S$_1$, S$_2$.

10. Aéronef ou spationef muni d'une aile d'aéronef selon l'une quelconque des revendications 1 à 9.

Fig. 1

Fig. 2

Fig. 3

**EP 3 187 413 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3014410 A1
- US 2015040349 A